# EUROPÄISCHE PATENTANMELDUNG

(11) **EP 2 123 509 A1**
(43) Veröffentlichungstag der Anmeldung: **25.11.2009**
(21) Anmeldenummer: 09160466.0
(22) Anmeldetag: 18.05.2009
(51) Int. Cl.: B60P 1/00, B60P 3/14, B60P 3/34, B60P 3/36

(54) **Wechseleinbau für Fahrzeuge**

(30) Priorität: 19.05.2008 DE 102008024169
(71) Anmelder: Rüther, Burkhard, 59609 Anröchte (DE); Ising, Reiner, 59602 Rüthen (DE)
(72) Erfinder: Rüther, Burkhard, 59609, Anröchte (DE); Ising, Reiner, 59602, Rüthen (DE)
(74) Vertreter: Graefe, Jörg

(57) **Zusammenfassung**

Wechseleinbau (10, 20) für Fahrzeugaufbauten, z. B. Container, oder Fahrzeuge, insbesondere Kraftfahrzeuge (30) wie Kombis, Lieferwagen, Kleinbussen aber auch Anhänger mit geschlossenen Aufbauten und ähnliche Fahrzeuge, mit folgenden Merkmalen:
- der Wechseleinbau (10, 20) ist für eine Montage und eine Demontage auf einem Boden des Fahrzeugaufbaus oder des Fahrzeugs (30) geeignet und eingerichtet,
- der Wechseleinbau (10, 20) weist eine Grundplatte (10) auf, die zumindest mittelbar auf dem Boden aufsetzbar ist,
- der Wechseleinbau weist Befestigungsmittel (16) auf, mit denen die Grundplatte (10) zumindest mittelbar auf dem Boden befestigbar ist.

## Beschreibung

Die vorliegende Erfindung betrifft einen Wechseleinbau für Fahrzeugaufbauten, zum Beispiel Container oder andere Wechselbehälter, oder Fahrzeuge, insbesondere Kraftfahrzeuge, wie Kombis, Lieferwagen, Kleinbusse aber auch Anhänger mit geschlossenen Aufbauten und ähnliche Fahrzeuge.

Kraftfahrzeuge wie Kombis, Lieferwagen, Kleinbusse aber auch sogenannte Minivans werden häufig in Handwerksbetrieben als Betriebsfahrzeuge benutzt. Häufig sind die Fahrzeuge mit Einbauregalen, Einbauschränken oder dergleichen ausgestattet, in denen die Handwerker Materialien und Werkzeuge lagern. Ebenfalls ist es bekannt, elektrische Geräte, wie zum Beispiel Messinstrumente, fest in Regalen oder Schränken in einem Kraftfahrzeuginnenraum zu montieren.

Diese Betriebsfahrzeuge werden in der Regel nur an den Wochentagen genutzt. Am Wochenende und an arbeitsfreien Tagen bleiben die Fahrzeuge ungenutzt. Dieses liegt an den festen Einbauten in den Fahrzeugen, die eine andere Nutzung der Fahrzeuge an den arbeitsfreien Tagen verhindern oder erschweren. Eine solche andere Nutzung der Fahrzeuge an arbeitsfreien Tagen könnte beispielsweise die Nutzung der Fahrzeuge für die Personenbeförderung oder aber als Campingfahrzeug sein.

Darüber hinaus sind die festen Einbauten in den Fahrzeuginnenräumen auch während der Arbeitszeit gelegentlich hinderlich. Die Einbauten hindern insbesondere, wenn größere Güter transportiert werden sollen, die den gesamten oder fast den gesamten Fahrzeuginnenraum in Anspruch nehmen.

Auch Privatpersonen können ähnliche Probleme haben. So möchte zum Beispiel eine Privatperson einen Minivan im Alltag zur Personenbeförderung nutzen, während in der Urlaubszeit eine Nutzung als Wohnmobil gewünscht wird.

Die vorgenannten Probleme müssen nicht nur bei Kraftfahrzeugen auftreten, sondern liegen gleichermaßen für Anhänger mit geschlossenen Aufbauten, Container oder andere Wechselbehälter vor.

Von vielen Benutzern solcher Fahrzeugaufbauten oder Fahrzeugen wird es gewünscht, ihre Fahrzeugaufbauten oder Fahrzeuge flexibler nutzen zu können. Hier setzt die vorliegende Erfindung an.

Der vorliegenden Erfindung liegt die Aufgabe zugrunde, Fahrzeugaufbauten und Fahrzeuge flexibler nutzbar zu machen.

Diese Aufgabe wird durch einen erfindungsgemäßen Wechseleinbau für Fahrzeugaufbauten oder Fahrzeuge gelöst. Ein solcher erfindungsgemäßer Wechseleinbau kann in den Fahrzeugaufbauten oder Fahrzeugen montiert und demontiert werden. Der Wechseleinbau kann damit je nach gewünschter Nutzung aus dem Fahrzeugaufbau oder aus dem Fahrzeug entnommen werden. Ein erfindungsgemäßer Wechseleinbau ist für die Montage oder Demontage auf einem Boden des Fahrzeugaufbaus oder des Fahrzeugs geeignet und eingerichtet. Der Wechseleinbau weist eine Grundplatte auf, die zumindest mittelbar auf den Boden des Fahrzeugaufbaus oder des Fahrzeugs aufgesetzt werden kann. Ein erfindungsgemäßer Wechseleinbau weist Befestigungsmittel auf, mit denen Grundplatte zumindest mittelbar auf dem Boden befestigt werden kann. Ein solcher erfindungsgemäßer Wechseleinbau kann schnell aus dem Fahrzeugaufbau oder dem Fahrzeug entnommen werden und gegen einen anderen erfindungsgemäßen Wechseleinbau ausgetauscht werden. Damit kann das Fahrzeug durch ein einfaches Austauschen der Wechseleinbauten unterschiedlichen Nutzungen zugeführt werden. Der Fahrzeugaufbau oder das Fahrzeug kann damit deutlich flexibler für verschiedene Zwecke genutzt werden.

Ein erfindungsgemäßer Wechseleinbau kann Möbel umfassen, die auf der Grundplatte befestigt sind. Vorzugsweise sind die Möbel lösbar auf der Grundplatte angebracht. Es kann vorgesehen sein, dass der Befestigungsort der Möbel auf der Grundplatte veränderbar ist. Es kann insbesondere vorgesehen sein, dass die Möbel auf der Grundplatte verschoben und/oder verdreht werden.

Bei den Möbeln eines erfindungsgemäßen Wechseleinbaus kann es sich um Sitzbänke, Einzelsitze, Regale, Schränke und/oder Tische handeln. In den Regalen oder Schränken können elektrische oder mechanische Geräte montiert sein.

Auf einer Oberseite der Grundplatte können Verzurrösen, Haken oder ähnliches angebracht sein, mit welchen zu transportierende Güter auf der Grundplatte befestigt werden können.

Ein erfindungsgemäßer Wechseleinbau kann an einer Unterseite der Grundplatte Rollen, Schienen, Gleitelemente oder ähnliches aufweisen. Mit diesen Rollen, Schienen, Gleitelementen oder ähnlichem ist der Wechseleinbau zumindest mittelbar auf dem Boden des Fahrzeugs oder des Fahrzeugaufbaus verschiebbar.

An der Unterseite der Grundplatte kann ein zusammenfaltbares oder zusammenklappbares Fahrgestell vorgesehen sein. Dieses Fahrgestell kann beim Entnehmen des Wechseleinbaus aus dem Fahrzeug oder dem Fahrzeugaufbau auseinandergefaltet oder auseinandergeklappt werden, so dass der Wechseleinbau außerhalb des Fahrzeugaufbaus oder des Fahrzeugs auf dem Fahrgestell verfahren werden kann. Alternativ könnte ein gegebenenfalls höhenverstellbarer Tischwagen oder ein Podest zur Unterstützung des Wechseleinbaus außerhalb des Fahrzeugs oder des Fahrzeugaufbaus dienen.

An dem Wechseleinbau können Ösen, Haken oder dergleichen vorgesehen sein, an dem ein Hebezeug angebracht werden kann. Über das Hebezeug kann der Wechseleinbau an einen Kran angehängt werden.

Die Unterseite der Grundplatte eines erfindungsgemäßen Wechseleinbaus kann Bereiche aufweisen, die geeignet und eingerichtet sind, so dass eine Hubgabel eines Hubwagens oder eines Gabelstablers an diesen Bereichen angreifen kann.

Die Grundplatte kann aus mehreren Teilen zusammengesetzt sein. Die Teile der Grundplatte können über Beschläge, insbesondere Scharniere miteinander verbunden sein. Damit ist es möglich, Teile der Grundplatte von der übrigen Grundplatte zeitweise zu trennen oder gegenüber der übrigen Grundplatte umzuklappen, so dass eine einfache Montage oder Demontage der Grundplatte in dem Fahrzeug oder dem Fahrzeugaufbau möglich ist. Dies kann sinnvoll sein, beispielsweise wenn die Kontur des Fahrzeugsinnenraums am Boden zum Beispiel aufgrund von Radkästen Einbuchtungen aufweist.

Die erfindungsgemäße Aufgabe wird ferner dadurch gelöst, dass eine Anordnung aus einem Fahrzeugaufbau oder einem Fahrzeug und einem erfindungsgemäßen Wechseleinbau hergestellt wird. Der Wechseleinbau ist dabei zumindest mittelbar auf einem Boden des Innenraums des Fahrzeugaufbaus oder des Fahrzeugs demontierbar montiert.

Auf dem Boden des Innenraums eines Fahrzeugaufbaus oder eines Fahrzeugs einer erfindungsgemäßen Anordnung kann eine Verbindungsplatte montiert sein. Auf dieser Verbindungsplatte kann der Wechselaufbau demontierbar montiert sein.

Es ist möglich, dass bei einer erfindungsgemäßen Anordnung an dem Boden des Innenraums Befestigungsmittel vorgesehen sind, mit denen die Verbindungsplatte an dem Boden befestigt ist oder die Grundplatte des Wechseleinbaus demontierbar montiert ist. Bei den Befestigungsmitteln kann es sich um Haken, Ösen, Bohrungen, Gewindestangen oder Gewindebolzen oder ähnliches handeln.

Auf dem Boden des Innenraums oder auf der Verbindungsplatte können Rollen, Schienen, Gleitelemente, Nuten, Löcher, Befestigungselemente oder ähnliches angebracht sein, auf welchem die Grundplatte verschoben werden kann. Sind solche Elemente auf dem Boden des Innenraums des Fahrzeugs beziehungsweise Fahrzeugaufbaus vorgesehen, könnte die Verbindungsplatte entfallen.

Der Fahrzeugaufbau oder das Fahrzeug einer erfindungsgemäßen Anordnung kann eine Tür, eine Klappe oder dergleichen haben, über welche der demontierte Wechseleinbau aus dem Fahrzeugaufbau oder dem Fahrzeug herausgenommen werden kann.

Ausführungsbeispiele für erfindungsgemäße Wechseleinbauten und Anordnungen aus Fahrzeugen und erfindungsgemäßen Wechseleinbauten sind anhand der Figuren näher beschrieben. Darin zeigen:
- Fig. 1 bis Fig. 5: Ansichten einer Grundplatte eines erfindungsgemäßen Wechseleinbaus,
- Fig. 6 bis Fig. 9: Ansichten einer Grundplatte mit einklappbarem Fahrgestell,
- Fig. 10 bis Fig. 13: Ansichten einer Anordnung aus einem Lieferwagen und einer Grundplatte gemäß Figur 1,
- Fig. 14 bis Fig. 17: Ansichten einer Anordnung aus einem Lieferwagen und einer Grundplatte gemäß Figur 6,

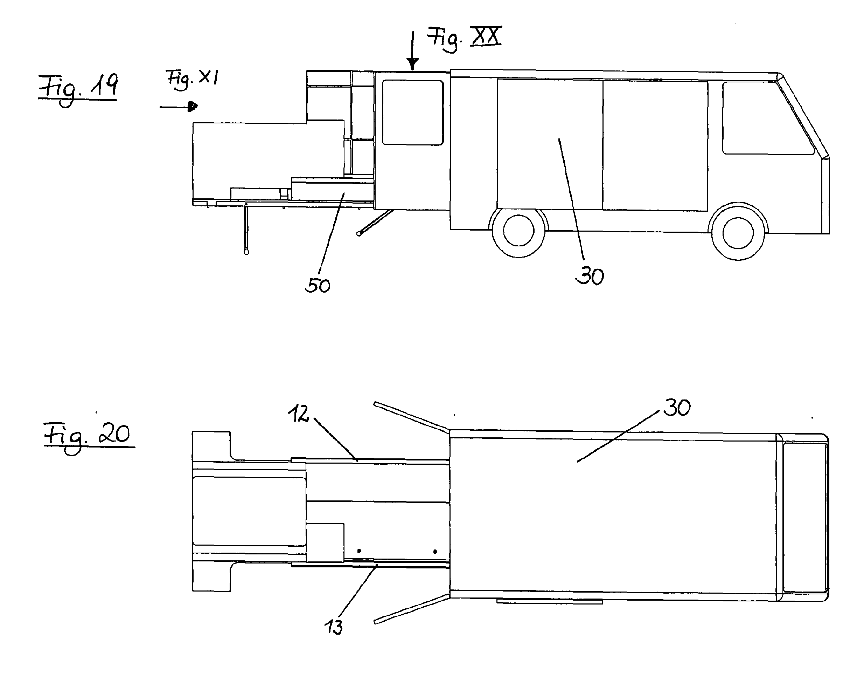

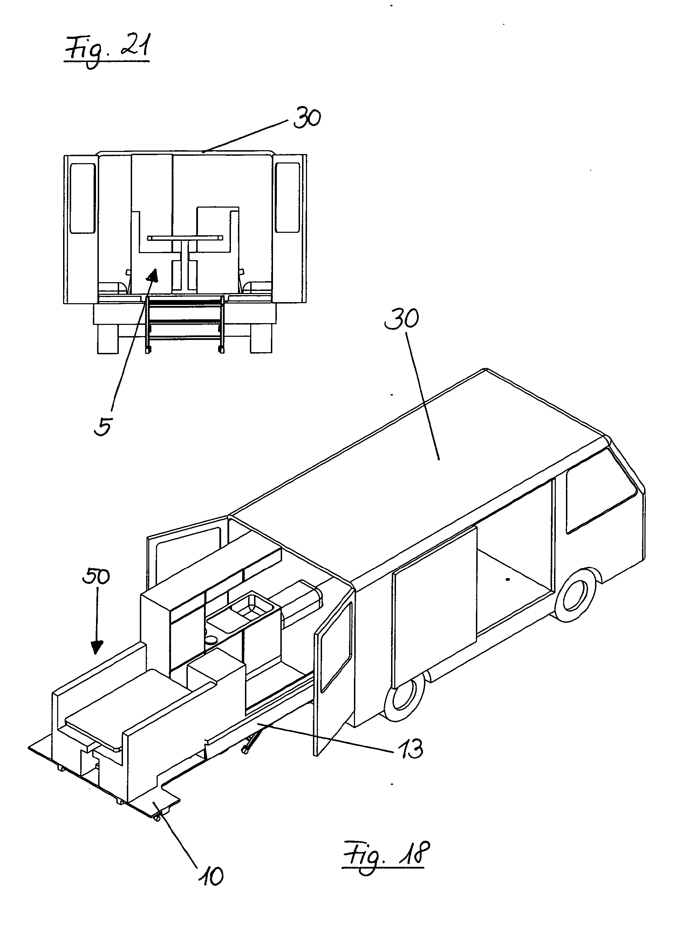

- Fig. 18 bis Fig. 21: Ansichten der Anordnung gemäß Figur 14 mit einer Wohnmobileinrichtung auf der Grundplatte,
- Fig. 22 bis Fig. 25: Ansichten der Anordnung gemäß Figur 14 mit einem Regalsystem auf der Grundplatte,
- Fig. 26 bis Fig. 29: Ansichten einer Anordnung gemäß Figur 14 mit Sitzbänken auf der Grundplatte.

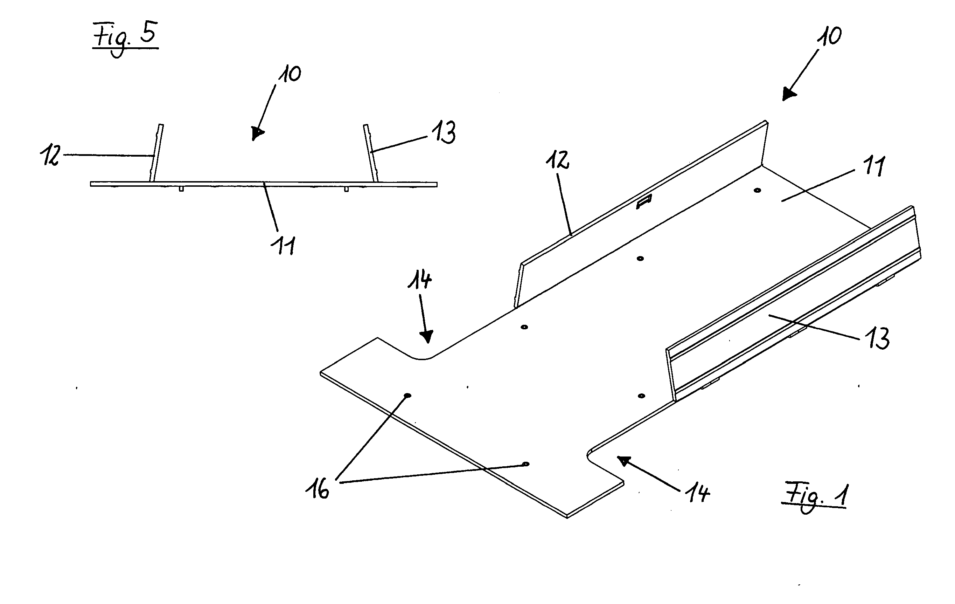

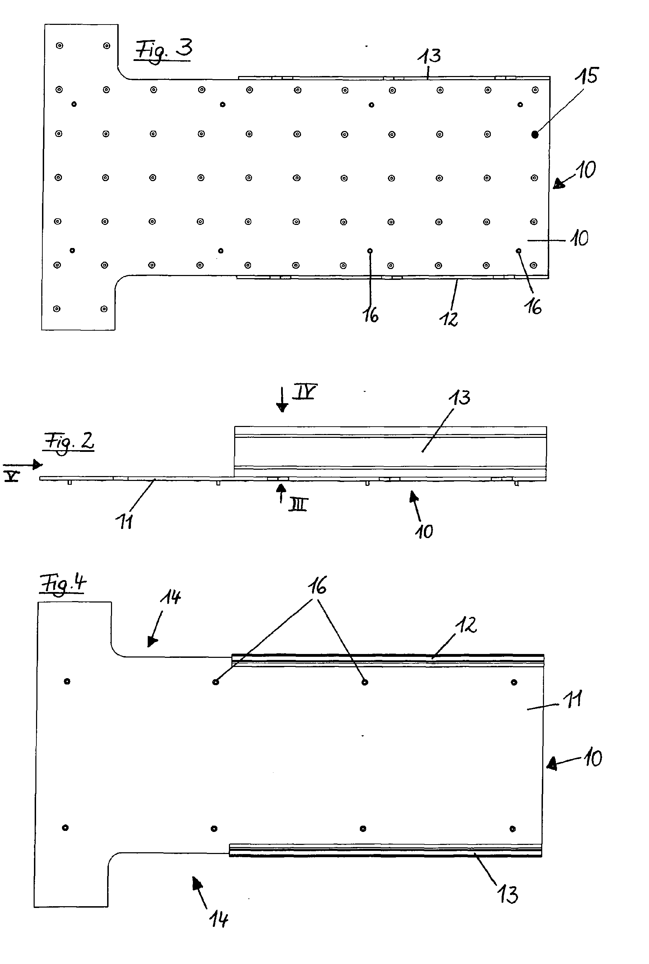

Die in den Figuren 1 bis 5 dargestellte Grundplatte 10 eines erfindungsgemäßen Wechseleinbaus hat eine äußere Kontur, die der Kontur des Innenraums eines Lieferwagens auf dessen Boden nachgebildet ist. Die äußere Kontur der Grundplatte 10 ist im Wesentlichen rechteckig. Die Grundplatte 10 ist aus drei Teilen 11, 12, 13 zusammengesetzt. Ein erstes Teil 11 der drei Teile 11, 12, 13 ist über Scharniere mit einem zweiten und einem dritten er drei Teile 11, 12, 13 verbunden. In den Figuren 1 bis 5 ist das zweite Teil 12 und das dritte Teil 13 gegenüber dem ersten Teil 11 nach oben geklappt. In einer heruntergeklappten Stellung bilden die Oberseiten der drei Teile 11, 12, 13 der Grundplatte eine Ebene. Dann hat die Grundplatte die bereits erwähnte im Wesentlichen rechteckige Kontur. Die rechteckige Kontur der Grundplatte 10 wird lediglich durch zwei Einbuchtungen 14 unterbrochen. Diese beiden Einbuchtungen 14, die benachbart zu dem zweiten Teil 12 und dem dritten Teil 13 liegen, dienen der Aufnahme von Radkästen, die in den Innenraum des Fahrzeugs hineinragen, in welchem die Grundplatte 10 montiert werden kann.

Auf einer Unterseite der Grundplatte 10 sind Rollen 15 angebracht, auf denen die Grundplatte 10 auf dem Boden des Fahrzeuginnenraums gerollt werden kann. Ferner sind an der Grundplatte 10 Befestigungselemente 16 vorgesehen, die von einer Oberseite der Grundplatte 10 bedienbar sind und der festen Verbindung der Grundplatte 10 mit dem Boden des Fahrzeugsinnenraums dienen.

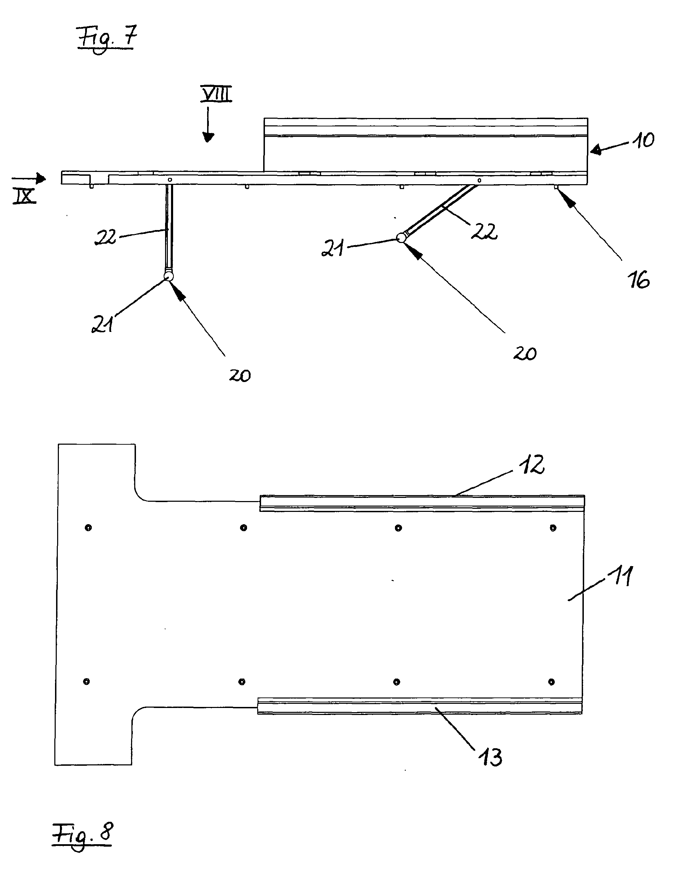

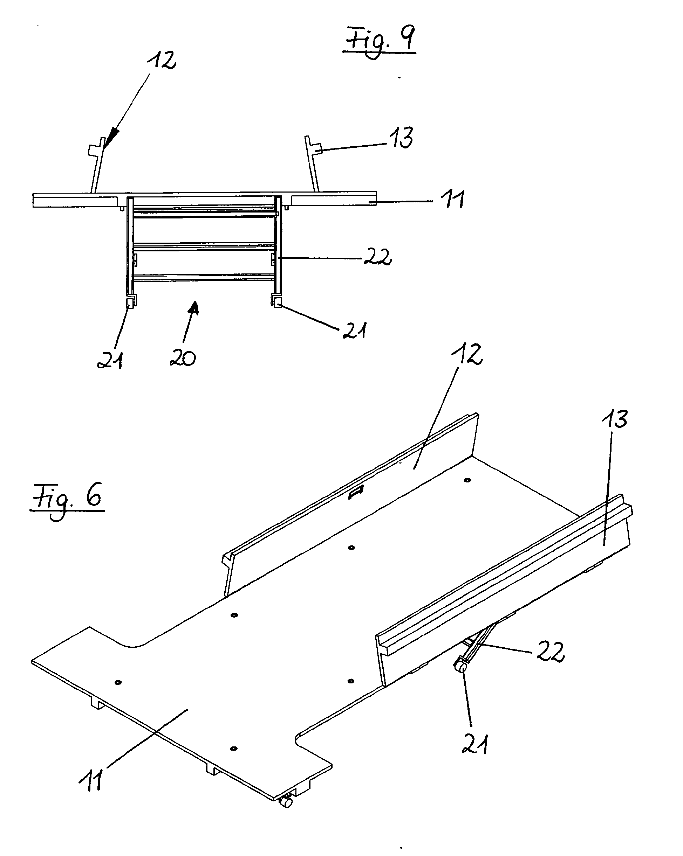

Der in den Figuren 6 bis 9 dargestellte Wechseleinbau umfasst neben der Grundplatte 10 ein einklappbares Fahrgestell 20, welches an der Unterseite der Grundplatte 10 befestigt ist. Die Grundplatte ist im Großen und Ganzen so wie die in den Figuren 1 bis 5 dargestellte Grundplatte ausgebildet. Im Unterschied zu der Grundplatte 10 gemäß der Figuren 1 bis 5 weist die Grundplatte 10 des Wechseleinbaus gemäß der Figuren 6 bis 9 jedoch keine Rollen 15 an der Unterseite auf.

Das einklappbare Fahrgestell 20 weist zwei schwenkbar an der Unterseite der Grundplatte 10 befestigte Rahmen 22 auf. An den im ausgeklappten Zustand der Fahrgestelle 20 unteren Enden sind Rollen 21 vorgesehen.

Im montierten Zustand des Wechseleinbaus ist das Fahrgestell 20 eingeklappt. Es befindet sich dann zwischen der Unterseite der Grundplatte 10 und dem Boden des Fahrzeugs. Wird der Wechseleinbau dagegen aus dem Fahrzeug entnommen, werden die Fahrgestellteile 20 nacheinander ausgeklappt und der Wechseleinbau ruht auf dem Fahrgestell 20. Auf dem Fahrgestell 20 kann der Wechseleinbau dann verschoben werden.

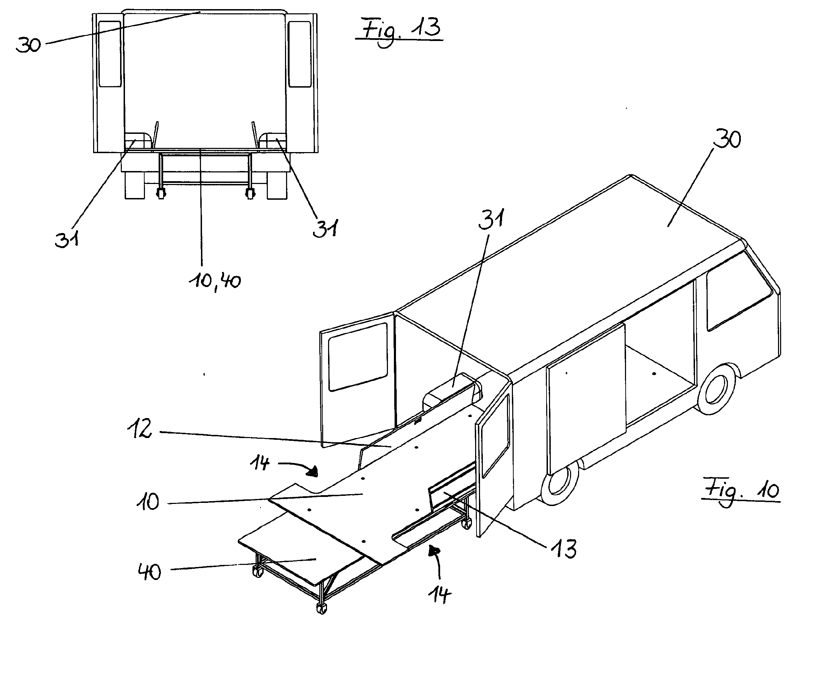

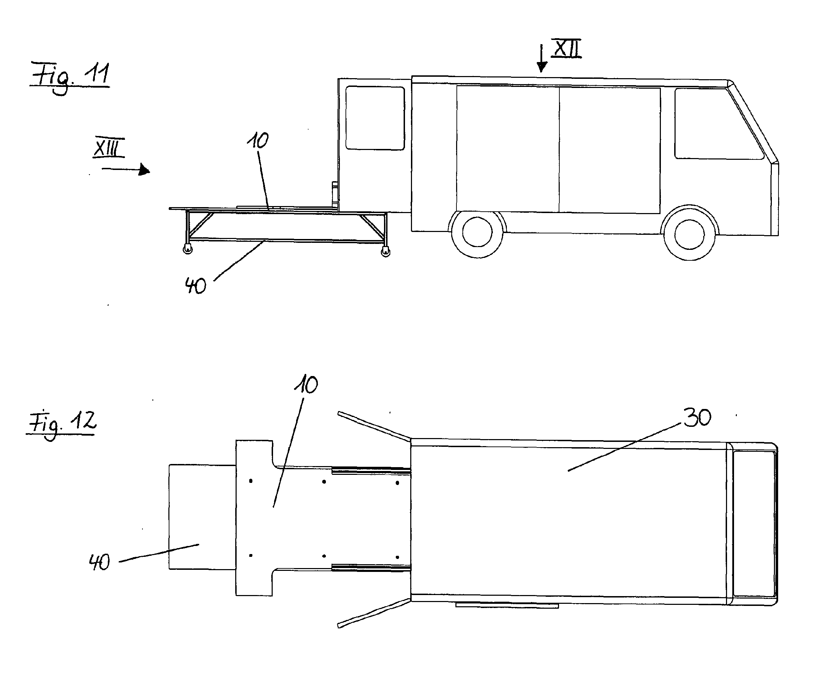

Die in den Figuren 10 bis 13 dargestellte Anordnung umfasst neben dem Wechseleinbau umfassend die Grundplatte 10 ein Fahrzeug 30, in welchem der Wechseleinbau, d. h. die Grundplatte 10 montiert oder demontiert wird. Die Grundplatte 10 ruht dazu noch zum Teil auf einem Rolltisch 40, der die Höhe des Bodens des Fahrzeugs 30 hat. Die Grundplatte 10 kann daher mühelos von dem Rolltisch 40 in den Innenraum des Fahrzeugs 30 eingeschoben werden oder umgekehrt, aus dem Innenraum des Fahrzeugs 30 auf den Rolltisch 40 geschoben werden. Die Radkästen 31 der Hinterräder des Fahrzeugs ragen in den Innenraum des Kraftfahrzeugs 30 hinein. Damit die Grundplatte 10 ohne großen Kraftaufwand in den Innenraum des Fahrzeugs 30 eingeschoben werden kann, sind das zweite und das dritte Teil 12, 13 der Grundplatte hochgeklappt. Ist die Grundplatte 10 vollständig in das Fahrzeug eingeschoben, können das zweite Teil 12 und das dritte Teil 30 heruntergeklappt werden und die Radkästen 31 greifen in die Einbuchtungen 14 der Grundplatte ein.

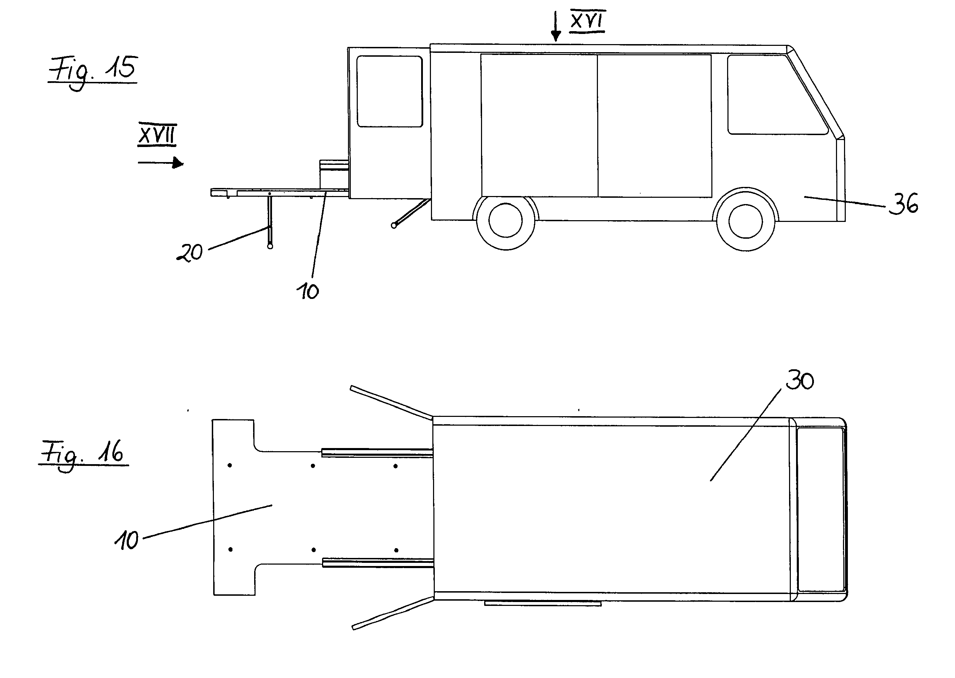

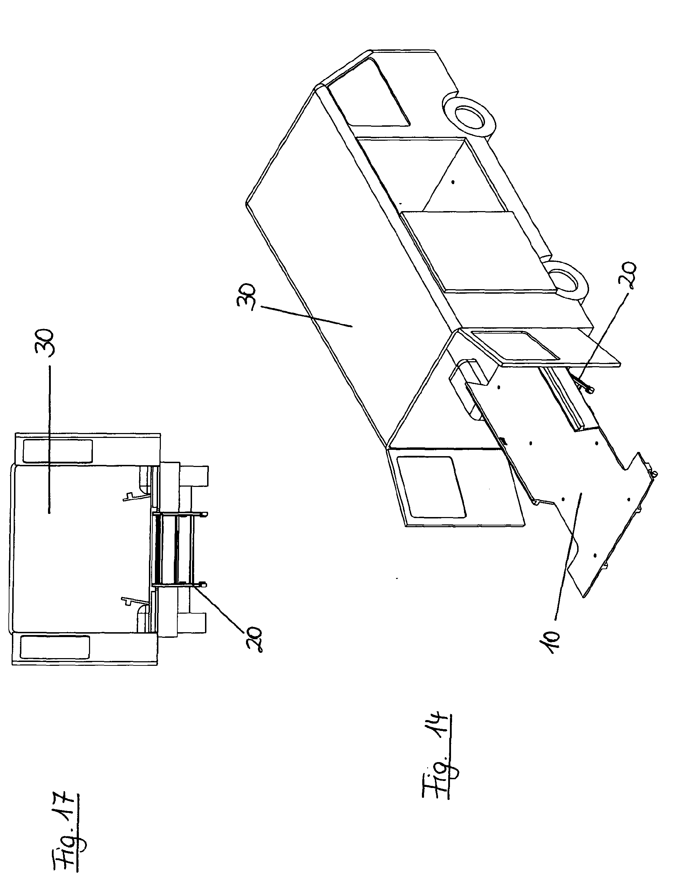

Die in den Figuren 14 bis 17 dargestellte Anordnung umfasst neben dem Kraftfahrzeug 30 einen Wechseleinbau 10, 20 mit einer Grundplatte 10 und einem einklappbaren Fahrgestell 20, wie es aus den Figuren 6 bis 9 bekannt ist.

Bei der Anordnung gemäß der Ziffern 18 bis 21 ist auf die Grundplatte 10 der Anordnung gemäß der Figur 14 bis 17 eine Wohnmobileinrichtung montiert. Die auf der Grundplatte 10 montierten Möbel 50 der Wohnmobileinrichtung sind in die Mitte der Grundplatte 10 geschoben. Nach erfolgter Montage können diese, sobald das zweite und das dritte Teil 12, 13 heruntergeklappt sind, nach außen geschoben und dort fixiert werden.

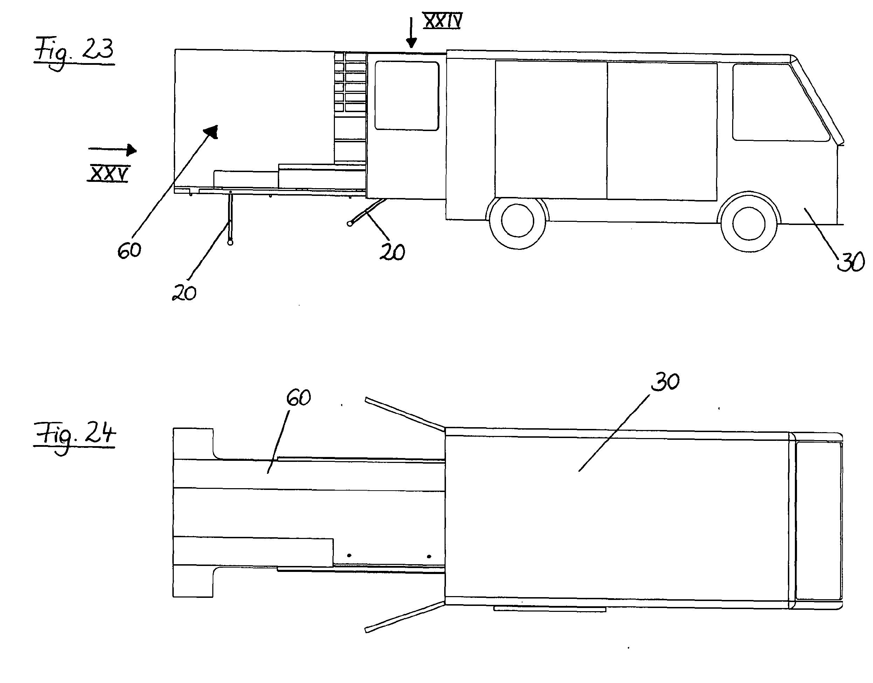

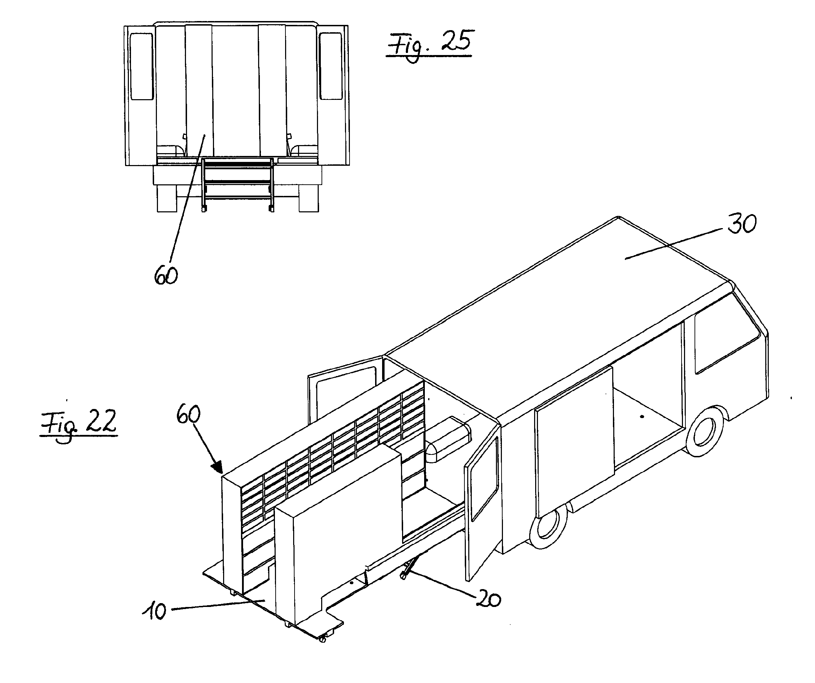

Dagegen sind bei der Anordnung gemäß der Figuren 22 bis 25 auf die Grundplatte 10 Regale eines Regalsystems oder Schranksystems montiert. Eine Anordnung aus dem Fahrzeug 30 und dem Wechseleinbau 10, 20, 60 kann beispielsweise als Fahrzeug für einen Installationsbetrieb dienen.

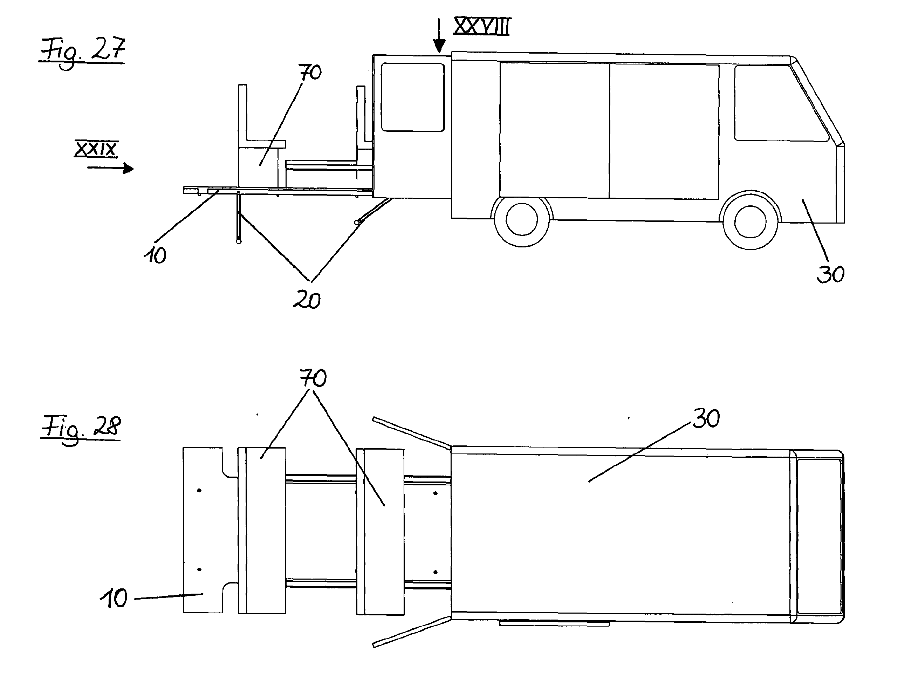

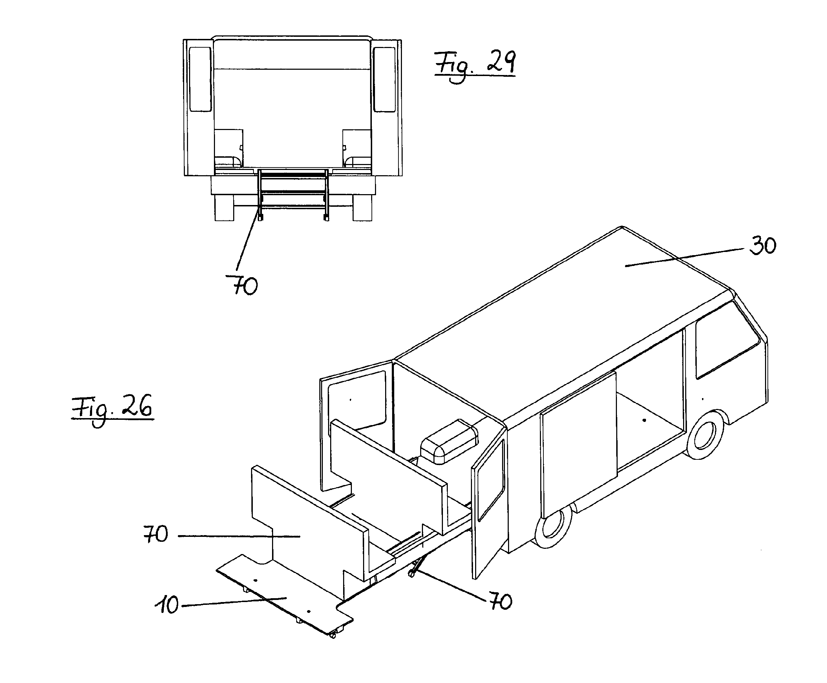

Auf die Grundplatte 10 der Anordnung gemäß der Figuren 26 bis 29 sind Sitzbänke 70 montiert. Das Fahrzeug 30 mit dem Wechseleinbau 10, 20, 70 kann als Kleinbus zur Personenbeförderung dienen.

## Patentansprüche

1. Wechseleinbau (10, 20) für Fahrzeugaufbauten, z. B. Container, oder Fahrzeuge, insbesondere Kraftfahrzeuge (30) wie Kombis, Lieferwagen, Kleinbussen aber auch Anhänger mit geschlossenen Aufbauten und ähnliche Fahrzeuge, mit folgenden Merkmalen:
- der Wechseleinbau (10, 20) ist für eine Montage und eine Demontage auf einem Boden des Fahrzeugaufbaus oder des Fahrzeugs (30) geeignet und eingerichtet,
- der Wechseleinbau (10, 20) weist eine Grundplatte (10) auf, die zumindest mittelbar auf dem Boden aufsetzbar ist,
- der Wechseleinbau weist Befestigungsmittel (16) auf, mit denen die Grundplatte (10) zumindest mittelbar auf dem Boden befestigbar ist.

2. Wechseleinbau (10, 20) nach Anspruch 1, **dadurch gekennzeichnet, dass** der Wechseleinbau (10, 20) Möbel (50, 60, 70) umfasst, die auf der Grundplatte (10) befestigt sind.

3. Wechseleinbau nach Anspruch 2, **dadurch gekennzeichnet, dass** die Möbel lösbar auf der Grundplatte befestigt sind.

4. Wechseleinbau (10, 20) nach Anspruch 2 oder 3, **dadurch gekennzeichnet, dass** der Befestigungsort der Möbel (50, 60, 70) auf der Grundplatte (10) veränderbar ist.

5. Wechseleinbau (10, 20) nach Anspruch 4, **dadurch gekennzeichnet, dass** die Möbel (50, 60, 70) auf der Grundplatte (10) verschiebbar und/oder verdrehbar sind.

6. Wechseleinbau (10, 20) nach einem der Ansprüche 2 bis 5, **dadurch gekennzeichnet, dass** die Möbel (50, 60, 70) Sitzbänke, Einzelsitze, Regale, Schränke und/oder Tische umfassen.

7. Wechseleinbau (10, 20) nach einem der Ansprüche 1 bis 6, **dadurch gekennzeichnet, dass** an einer Unterseite der Grundplatte(10) Rollen, Schienen, Gleitelemente oder ähnliches angebracht sind, auf welchen der Wechseleinbau (10, 20) zumindest mittelbar auf dem Boden verschiebbar ist.

8. Wechseleinbau (10, 20) nach einem der Ansprüche 1 bis 7, **dadurch gekennzeichnet, dass** an der Unterseite der Grundplatte (10) ein zusammenfaltbares oder zusammenklappbares Fahrgestell (20) angebracht ist, auf welchem der Wechseleinbau (10, 20) außerhalb des Fahrzeugaufbaus oder des Fahrzeugs (30) verfahrbar ist.

9. Wechseleinbau (10, 20) nach einem der Ansprüche 1 bis 8, **dadurch gekennzeichnet, dass** der Wechseleinbau (10, 20) Ösen, Haken oder dergleichen aufweist, an welchen ein Hebezeug anbringbar ist.

10. Wechseleinbau (10, 20) nach einem der Ansprüche 1 bis 9, **dadurch gekennzeichnet, dass** die Unterseite der Grundplatte (10) Bereiche aufweist, an welchen eine Hubgabel eines Hubwagens oder eines Gabelstaplers angreifen kann.

11. Wechseleinbau (10, 20) nach einem der Ansprüche 1 bis 10, **dadurch gekennzeichnet, dass** die Grundplatte (10) aus mehreren über Beschläge, insbesondere Scharniere miteinander verbundenen Teilen (11, 12, 13) zusammengesetzt ist.

12. Anordnung aus einem Fahrzeugaufbau oder einem Fahrzeug und einem Wechseleinbau (10, 20), der zumindest mittelbar auf einem Boden eines Innenraums des Fahrzeugaufbaus oder des Fahrzeugs (30) demontierbar montiert ist, wobei der Wechseleinbau (10, 20) nach einem der Ansprüche 1 bis 11 ausgestaltet ist.

13. Anordnung nach Anspruch 12, **dadurch gekennzeichnet, dass** auf dem Boden des Innenraums eine Verbindungsplatte montiert ist, auf welcher der Wechselaufbau demontierbar montiert ist.

14. Anordnung nach Anspruch 12 oder 13, **dadurch gekennzeichnet, dass** an dem Boden des Innenraums Befestigungsmittel (16) vorgesehen sind, mit denen die Verbindungsplatte befestigt ist oder die Grundplatte des Wechseleinbaus (10, 20) demontierbar montiert ist.

15. Anordnung nach einem der Ansprüche 12 bis 14, **dadurch gekennzeichnet, dass** auf dem Boden des Innenraums oder auf der Verbindungsplatte Rollen, Schienen, Gleitelemente oder ähnliches angebracht sind, auf welchen die Grundplatte (10) verschiebbar ist.

16. Anordnung nach einem der Ansprüche 12 bis 15, **dadurch gekennzeichnet, dass** der Fahrzeugaufbau oder das Fahrzeug (30) eine Tür, eine Klappe oder dergleichen hat, über welche der demontierte Wechseleinbau (10, 20) aus dem Fahrzeugaufbau oder dem Fahrzeug (30) herausnehmbar ist.
